## Europäisches Patentamt
## European Patent Office
## Office européen des brevets

(19)

(11) Publication number: **0 005 598**
**B1**

(12) **EUROPEAN PATENT SPECIFICATION**

(45) Date of publication of patent specification: **09.02.83**

(21) Application number: **79300739.4**

(22) Date of filing: **01.05.79**

(51) Int. Cl.³: **A 01 M 7/00,**
**A 01 B 69/02,**
**A 01 C 15/00, B 60 P 3/30**

(54) **Material distributing boom mounted on an agricultural vehicle.**

(30) Priority: **04.05.78 GB 1761878**
**02.08.78 GB 3194678**
**12.09.78 GB 3643778**

(43) Date of publication of application:
**28.11.79 Bulletin 79/24**

(45) Publication of the grant of the patent:
**09.02.83 Bulletin 83/6**

(84) Designated Contracting States:
**DE GB**

(56) References cited:
**FR - A - 2 384 433**
**GB - A - 1 507 149**
**US - A - 2 483 011**
**US - A - 2 850 958**
**US - A - 3 774 690**
**US - A - 3 782 634**

(73) Proprietor: **E. Allman & Company Limited**
**Birdham Road, Chichester**
**Sussex PO20 7BT (GB)**

(72) Inventor: **GIBSON,PETER HARROLD**
**LENCH FARM,INKBERROW**
**WORCESTERSHIRE WR7 4HX (GB)**

(74) Representative: **Pritchard, Colin Hubert et al,**
**Mathys & Squire 10 Fleet Street**
**London EC4Y 1AY (GB)**

Courier Press, Leamington Spa, England

## Material distributing boom mounted on an agricultural vehicle

This invention relates to material distributing apparatus for agricultural use having a boom carrying material distributing devices spaced therealong, the apparatus being carried by a prime mover across terrain to be treated while material is supplied to the distributing devices.

Agricultural vehicles equipped with boom structures for this purpose have previously been employed. Such vehicles are disclosed in British specification No. 1,507,149 and U.S. specification No. 3,782,634. The booms are either carried by specially built vehicles or arranged as attachments to conventional agricultural vehicles, such as tractors. Typically, such booms have been used for the distribution or application of chemicals for ground treatment or for the treatment of growing crops and one example of such use is for crop spraying, the boom carrying spray heads spaced along its length. It has also been proposed to carry a spray boom on a tank-supporting trailer towed behind a tractor, the boom being capable of assembly to one side or other of the tractor.

According to the present invention, material distributing apparatus for agricultural use having a boom carrying material distributing devices spaced therealong, the apparatus being carried by a prime mover across terrain to be treated while material is supplied to the distributing devices is characterised in that the boom is

### For Contracting States: BE, DE, FR, IT, NL, SE

pivoted at one end on the apparatus as carried by the prime mover; the opposite end of the boom is supported by a wheel in contact with the terrain and driving means is provided operable from the prime mover to drive the boom into a working position in which it is held at a predetermined angle to the direction of motion of the prime mover.

Apparatus embodying the present invention will now be described, by way of example, with reference to the accompanying drawings, in which,

Figure 1 is a schematic plan view of a boom arrangement adapted for spraying purposes,

Figure 2 is a diagrammatic representation of the arrangement throughout a turning movement,

Figure 3 illustrates schematically an alternative arrangement,

Figure 4 is a side view of a boom pivot arrangement,

Figure 5 is a partial sectional view along line V—V of Figure 4,

Figure 6 is a plan view of a further arrangement,

Figure 7 is a plan view of a trailing wheel arrangement,

Figure 8 is a diagrammatic representation of the arrangement of Figures 6 and 7 throughout an alternative turning movement, and

Figure 9 shows a further boom supporting and control arrangement.

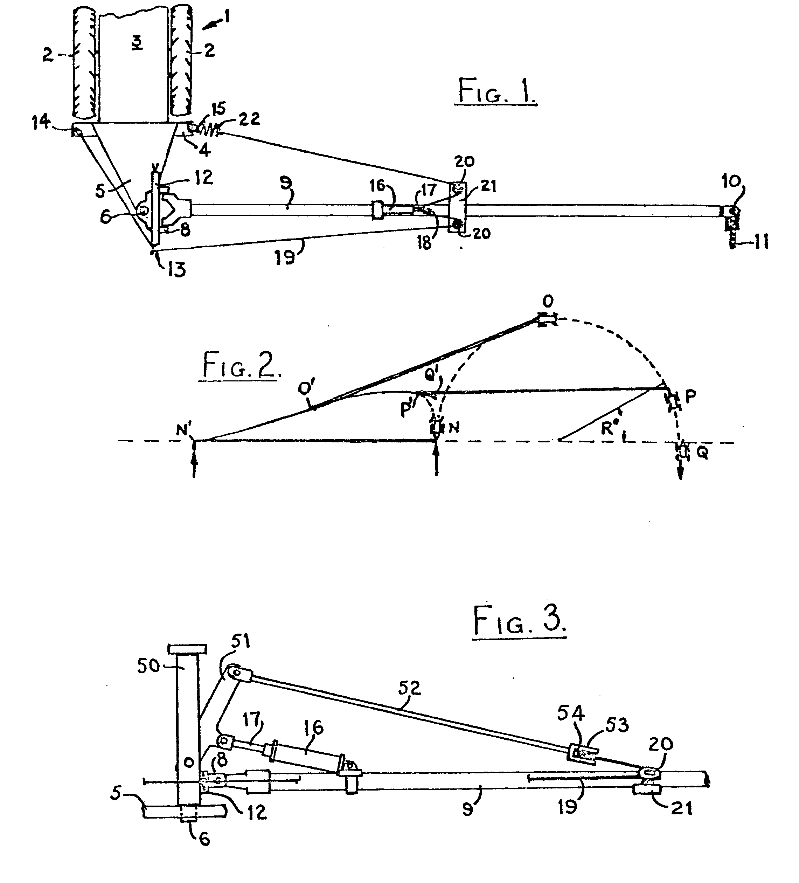

Referring now to the drawings, Figure 1 shows in skeleton diagrammatic form a plan view of a boom 9 supported on a tractor 1, all unnecessary details of construction being omitted so that the principles of operation may more readily be seen. Thus, for the purposes of the present explanation, the rear end of the tractor 1 is indicated with a pair of ground wheels 2 carried by a chassis 3.

### For Contracting State: GB

pivoted at one end on the apparatus as carried by the prime mover; the opposite end of the boom is supported by a wheel in contact with the terrain, driving means is provided operable from the prime mover to drive the boom into a working position in which it is held at a predetermined angle to the direction of motion of the prime mover, and means are provided for steering the wheel supporting said opposite end of the boom.

Apparatus embodying the present invention will now be described, by way of example, with reference to the accompanying drawings, in which,

Figure 1 is a schematic plan view of a boom arrangement adapted for spraying purposes,

Figure 2 is a diagrammatic representation of the arrangement throughout a turning movement,

Figure 3 illustrates schematically an alternative arrangement,

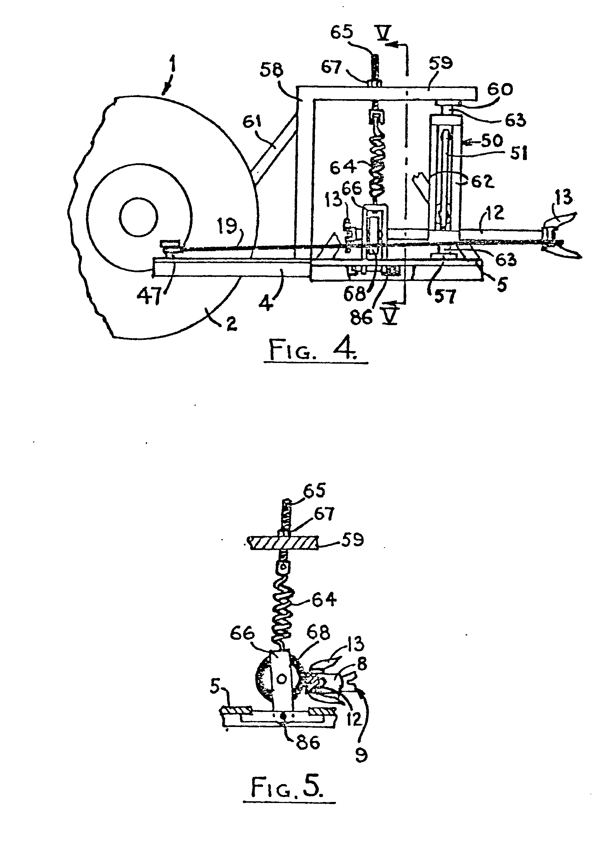

Figure 4 is a side view of a boom pivot arrangement,

Figure 5 is a partial sectional view along line V—V of Figure 4,

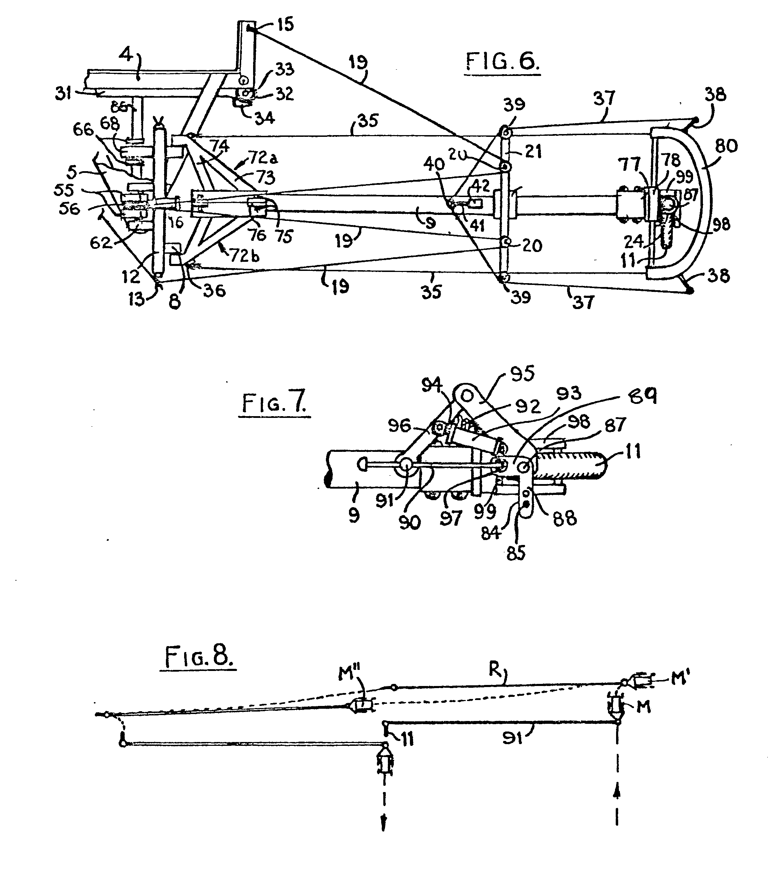

Figure 6 is a plan view of a further arrangement,

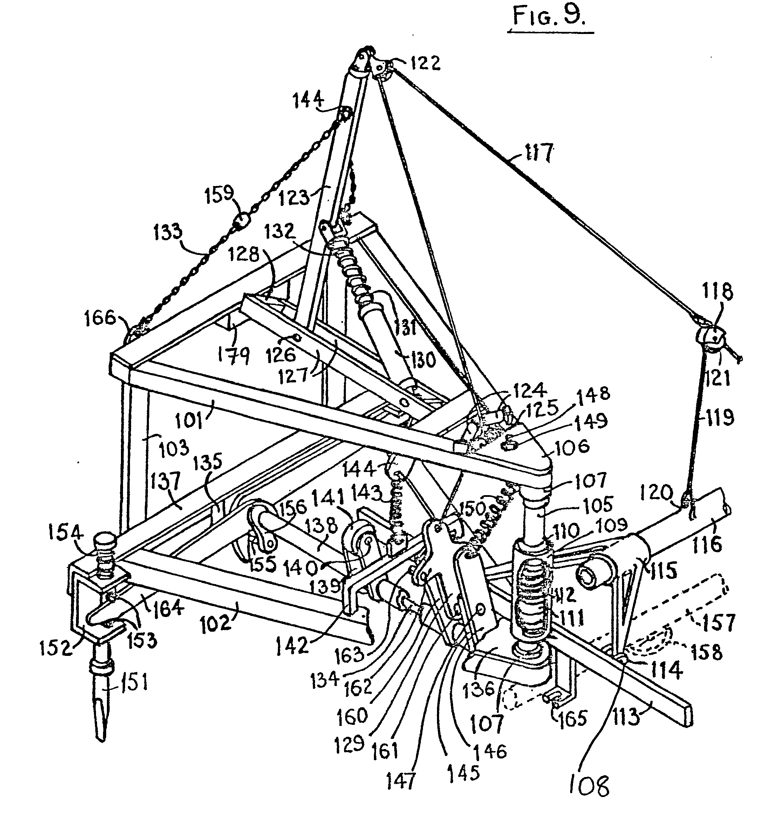

Figure 7 is a plan view of a trailing wheel arrangement,

Figure 8 is a diagrammatic representation of the arrangement of Figures 6 and 7 throughout an alternative turning movement, and

Figure 9 shows a further boom supporting and control arrangement.

Referring now to the drawings, Figure 1 shows in skeleton diagrammatic form a plan view of a boom 9 supported on a tractor 1, all unnecessary details of construction being omitted so that the principles of operation may more readily be seen. Thus, for the purposes of the present explanation, the rear end of the tractor 1 is indicated with a pair of ground wheels 2 carried by a chassis 3.

A triangular plate 5 mounted on a bar 4 is provided, either secured to the chassis 3 or arranged, for example, to be supported on a conventional three point linkage. The boom 9 is supported on a cross-bar 12 which is pivoted to the triangular plate at a pivot 6, and the boom 9 is pivoted in a horizontal plane between blocks 8 secured to the cross-bar 12.

A driving control cable 19 is provided for the boom 9 and passes from an anchor point 14 on the bar 4 through a cable guide 13 on the rearmost end of the crossbar 13 and thence to a guide pulley 20 mounted on a second cross-bar 21 carried on the boom 9. A hydraulic ram 16 is supported lengthwise on the boom 9 and is controlled so that its operating stroke is arranged to pull inwards its operating rod 17. The cable 19 passes from the pulley 20, round a pulley 18 carried by the rod 17 of the ram 16, and thence round a second guide pulley 20 on the cross-bar 21 on the opposite side of the boom 9 to a second anchor point 15 on the bar 4. A safety spring 22 is interposed between one end of the cable 19 and its associated anchor point, such as the point 15.

The outboard end of the boom 9 is supported by a trailing wheel 11 which is supported on a pivot 10 at the end of the boom 9, the arrangement allowing the wheel 11 to trail the boom with castor action. It will be realised that in use for, say, crop spraying, the boom would be fitted with spray heads along its length and these would be supplied with the required chemical from tanks carried on the tractor, the supply being under the control of the operator of the equipment.

The principle of operation of the driving cable 19 will be understood from a consideration of boom movement from a first working position as shown in the Figure in which the boom 9 projects outwards at substantially right angles to the fore-and-aft axis of the tractor 1 to one side thereof, to a second working position in which it projects outwards on the opposite side of the tractor 1. In moving from one working position to the other, the boom 9 passes round behind the tractor 1 and it will be appreciated that as it moves into line with the fore-and-aft axis, the cable 19 would need to be extended to permit this movement of the boom 9. To provide this extra length, the driving ram 16 is conditioned, during this initial movement, merely to load the cable 19 to prevent the development of any slack in the cable 19, with the result that the operating rod 17 is withdrawn from the ram 16. It will now be clear that during movement from one working position to the other, once the boom 9 has passed beyond the in-line position (i.e. after having completed the first 90° of turning movement) energisation of the ram 16 to pull its operating rod 17 inwards will pull on the cable 19 to pull the boom into its new working position.

In practice, the ram 16 does not need to be energised throughout the entire second half of the total movement, and one method of controlling the boom 9 by the ram 16 is illustrated with reference to Figure 2, which shows the relative paths taken by the tractor 1 and the trailing wheel 11 of the boom 9 when the tractor is turning at a headland after having, for example, completed the spraying of one strip of ground and preparatory to starting another. It is assumed that the tractor 1 has arrived at point N at the headland boundary, represented as a dashed line. The boom 9 is supported, at this stage, between the tractor 1 at point N, and the wheel 11 at point N'. At this point, the tractor operator shuts off the supply of spray fluid and frees the boom drive to allow the boom 9 to move. The tractor is then driven in a turning semi-circle, the mid-point of which is indicated at point O. Because the boom 9 is free to move, it trails behind the tractor 1 and when the tractor 1 is at point O, the trailing wheel 11 of the boom 9 will have reached approximately a point O'. As the tractor 1 continues its turn, it will reach a point P, within an angle R° of completion of the semi-circle. At this point the trailing wheel 11 will have reached a corresponding point P' and it is to be noted that the final movement of the tractor 1 from point P to a point Q on the headland boundary would result in only a very small change P'—Q' in the position of the trailing wheel 11, so that the boom 9 would not then be aligned with the headland boundary.

Thus, when the tractor 9 has reached a point at an angle of R° short of completion of the semi-circle, the operator applies full working pressure to the hydraulic ram 16, with the result that during the final angle R° of movement, the cable 19 (Figure 1) of the boom 9 is driven by the ram pulley 18 to pull the boom 9 into its required position, the trailing wheel 11 approximately following the path N', O', P', N shown in Figure 2. It will therefore be seen that this method of boom operation always requires less headland space than is required for a corresponding turning movement of the towing vehicle, and it will become apparent that this is true even where a towing vehicle has a small turning circle necessitating two quarter-turns with an intermediate straight-ahead movement. It is found, in practice, that the critical angle R° is somewhat less than 30°.

An improvement to the arrangement of Figure 1 is represented in elevation in Figure 3, which illustrates the arrangement in diagrammatic skeleton form. In this example, a vertical pillar 50 is mounted for rotation on the pivot 6 of the plate 5 and the crossbar 12 is, as before, secured to the pillar 50, the boom 9 being pivoted to the bar 12 by blocks 8, as before. An intermediate member 51 is pivoted to the pillar 50 and is connected at its lower end to the operating rod 17 of the ram 16. The upper end of the member 51 is coupled by a pull rod 52 to a fork 53 housing an idler pulley 54, the pulley being disposed between the guide pulleys 20 carried by the second crossbar 21 on the boom 9. It will be seen, therefore, that whereas the ram 16 of Figure 1 acts directly on the idler pulley 18, in the Figure 3 structure, the ram 16 acts through the member 51 and pull rod 52 on an equivalent pulley 54. Thus, the operating principle is unchanged, but a component of lifting force has been added by the layout of this second arrangement. This has the added advantage that the ram 16 may be used to assist in supporting the weight of the boom 9 and also enables the structure to be used over rough ground with considerably less risk of damage due, for example, to the trailing wheel 11 dropping into potholes.

The foregoing examples have described a simple boom structure consisting merely of a long tube. It will be realised that other forms of boom structure may be used in practical embodiments. Thus, a form of lattice boom assembled from, for example, angular or tubular members such as have previously been employed, may be substituted, using the principles described above, of a vertical pivot about which the boom may be driven from one working position to the other. The provision of the horizontal pivot incorporated in the inboard boom structure enables the boom to be used on uneven surfaces. The provision of the driving control cable 19 enables the boom to be driven into either of its working positions and it is also seen that the same driving arrangement may be used to relieve a part of the weight of the boom. In this connection it is to be observed that a number of advantages are obtained over previously proposed boom structures in that, not only is it possible to drive the boom into the second working position from the first without the necessity either to manhandle it into position or to perform relatively skillful and complicated driving manoeuvres, but that, because the boom is associated directly with the prime mover or driving vehicle, it is inherently more stable (for example, the stability of the boom support is not primarily dependent on the weight of liquid carried in a tank trailer, which weight decreases as spraying is continued) and the manoeuvring of the entire unit is simpler because no trailer is involved.

The preceding description has assumed a one-piece boom. However, it will be realised that a boom may be built up from shorter sections, the sections being provided with, for example, face plates on their ends to enable them to be assembled into a single structure. Such a form of assembly is particularly useful to provide the facility for varying the width of a sprayed row. Moreover, the sections may also be hinged together to allow the boom to be folded for transport, for example.

Used in the manner described, the present structure also has the advantage that the headlands required need never be greater than required merely for turning the prime mover itself. Moreover, the fact that the boom may effectively be turned within a headland no wider than half the prime mover turning circle means that provided the headland allows sufficient room for the vehicle to turn, the risk of damage to the boom by, for example, contact with a hedgerow, is avoided. The use of an extended side boom also allows spraying operations to be so conducted that the operator may be positioned upwind of the spray, and in this connection it will be realised that fine spray nozzles, such as those known as CDA units, are particularly suited for use with the present apparatus.

Marking of sprayed areas is also simplified, for example, by the positioning of the inboard spray head so that its spray just reaches the farther wheel track of the prime mover, the triangular plate 5 being sufficiently high to allow spray to pass beneath it. This wheel track then provides the mark to indicate the limit of spraying. On stubble, a tine or disc may be fitted to produce a positive mark. While the height of the boom may be made adjustable by suitably extending the pivot 6 and the pivot 10 for the trailing wheel, a further advantage is that the boom height, in use, is substantially constant, minimising the risk of damage to fragile spray heads and ensuring even spray cover.

The manual control operations required may also be automated. Thus, for example, a cam and switch arrangement may be associated with the pivot of the boom to control the actuation of the hydraulic ram. It is preferred to use an electrical control for the individual spray heads and a master switch can then be provided to disable all the heads as the boom drive ram is released at the end of a row. In addition, the heads may be selectively switched to permit, for example, their sequential switching or the switching of only selected heads to avoid excessive overspraying when the spraying rows meet the headlands at an angle, as when the field to be sprayed is an irregular shape.

Where delicate spray heads are used, it is preferred that they are mounted on bands which encircle the boom and which are lined with a resilient material, the bands being closed on the boom by over-centre toggle clips, for example. This form of mounting allows the heads to be swung above the boom (or, say, into the interior of a lattice boom structure) for protection during transport or storage.

In the embodiments so far described, it will be recalled that tension springs 22 are incorporated in the control cable 19 connections. In an alternative arrangement shown in greater detail in Figure 4, the control cable 19 attachment is simplified by the omission of the spring 22. The cable 19 is secured at each end to anchor points 47 on the bar 4, which in this arrangement is extended forwardly around the wheels 2 of the tractor 1 to increase the angle between the cable 19 and the boom 9 on that side of the tractor 1 from which the boom 9 projects when in a working position.

The triangular plate 5 is provided as previously described, and supports the pillar 50 in a bottom bearing block 57. A framework 58 is mounted on the bar 4 and has a projecting member 59 carrying a bearing block 60 to support the upper end of the pillar 50. A strut 61 secured to the tractor 1 is provided to improve the rigidity of the framework 58.

The pillar 50 is made from a pair of spaced members 62, secured to stub ends 63 carried in the bearing blocks 57 and 60. The intermediate member 51 (as shown in Figure 3) is attached to the ram 16 and pull rod 52 as previously described and is pivoted between the members 62 (Figure 4). The crossbar 12 which supports the boom 9 is secured to the members 62 and the cable guides 13 are carried on the crossbar, as before. A tensioning spring 64 is provided between a tension adjusting screw 65 passing through the member 59, and a buffer stop wheel carrier 66. An adjusting nut 67 is provided on the screw 65. A buffer stop wheel 68 is pivoted in the carrier 66, which is itself pivoted on a rod 86 secured below the plate 5, a hole being provided in the plate 5 above the rod 86 for the carrier 66.

An elevation of the buffer stop wheel support arrangement is shown in Figure 5, and it will be seen more clearly from this Figure that, in operation, as the boom swings round to its working position at right-angles to the tractor axis, the crossbar 12 is brought into contact with the periphery of the wheel 68, displacing it from its normal position in which it is maintained by the spring 64. It is preferred that the wheel 68 is fitted with a resilient outer surface, such as a moulded rubber rim, and it will be appreciated that the extent of the displacement of the wheel 68 is dependent upon the force applied to drive the boom into position and the tension applied to the spring 64 by the adjustment of the nut 67.

With this arrangement the drive force from the hydraulic ram 16 is maintained to hold the boom 9 in its working position. It will also be clear that the tension applied to the wheel 68 effectively provides the cable tension applied by the springs 22 in the earlier examples.

A further arrangement, illustrated in Figure 6, shows an example of a simple tubular boom 9 supported, as before, on a crossbar 12 which is pivoted on the plate 5 by means of a vertical pillar structure 50 similar to that of Figure 4. The inboard end of the boom 9 is held in a clamp 72 comprising two identical halves 72*a* and 72*b*, which each have a hollow half-cylindrical portion formed on one end of a pair of struts 73 and 74. The two halves are lined with a resilient material e.g. rubber sheet, and are secured around the end of the boom 9 by bolts 75 passing through lugs 76. The clamp structure is pivoted on the crossbar 12 as before by blocks 8.

The outer end of the boom 9 carries a flange member 77, which is made in two identical halves and clamped to the boom 9 in much the same way as the clamp structure 72. An end plate 78 is secured to a vertical end tube 24 which supports the trailing wheel 11 and is bolted to the flange member 77. The end plate 78 also supports a hoop 80 as a precaution against damage to the boom 9 in the event of a runaway. The hoop 80 is made of sufficiently large diameter to prevent the end of the boom 9 becoming entangled in, for example, hedgerows bounding the field and also provides protection to the trailing wheel 11 and its mounting from, say, collision with static objects, such as trees, fencing or gateposts.

It will be realised that by using flange members 77, the boom 9 may, as noted earlier, be built up from shorter lengths of tube, each fitted with flanges 77 at their abutting ends, these adjacent flanges 77 being bolted together.

A number of other features are illustrated in Figure 6. For example, the buffer stop wheel 68, instead of being spring loaded as shown in Figures 4 and 5, is pivoted, as before, in the carrier 66, which is pivoted on the shaft 86. In this case, however, the shaft 86 is supported in bearings (not shown), the forward bearing being supported beneath the bar 4, while the rearward bearing is supported under the plate 5. The shaft 86 carries a hub (not shown) to which the carrier 66 is secured by a shear pin so that as long as the shear pin is intact, the movement of the buffer stop wheel 68 turns the shaft, while if the load on the wheel 68 exceeds a safety limit, for example, if the tractor is reversed while the boom 9 is extended sideways the shear pin is fractured and allows the wheel 68 to swing freely.

The shaft 86 is also secured to a sub-frame 31 extending across the rear of the tractor 1 below the bar 4. The sub-frame 31 is spring loaded by a pair of springs 32 mounted at each end of the sub-frame 31 and acting on lugs 33 carried by the bar 4. Preferably, hydraulic dampers (not shown) are fitted between the sub-frame 31 and the bar 4 to absorb the shock of engagement of the crossbar 12 with the wheel 68. It will be seen that the sub-frame 31 swings in a vertical plane with movement of the shaft 86 in response to displacement of the wheel 68. If marker tines 34 are required, as previously noted, these may be fitted as indicated, to the ends of the sub-frame 31, thereby ensuring that they are respectively automatically moved into and out of working position as the boom 9 swings to each side.

In a further refinement shown in the Figure, it will be seen that the pull rod 52 of Figure 3 is dispensed with. As shown in Figure 6, the cable 19 is passed over pulleys 20 on the second crossbar 21 and thence to a pulley 56. The pulley 56 is carried between a pair of intermediate members 55, which replace the single member 51 shown in Figure 4, the hydraulic ram 16 being coupled to the members 55 in the same way as described for the member 51 of the earlier Figure.

For the protection of the boom 9, a guard wire 35 is secured to eyes 36 provided on the clamp members 72 and passes round, preferably through, the hoop 80. As an added protection, a trip wire 37 is secured at each end to a pair of projections on the hoop 80. The wire 37 passes round a pair of pulleys 39 on the ends of the second crossbar 21 and over a further pulley 40. The pulley 40 is mounted on a spring loaded rod 41 whose remote end is supported to actuate a micro-switch 42. The micro-switch 42 is connected to disable the hydraulic ram 16 in the even that, during use or in manoeuvring the equipment, the end portion of the boom 9 approaches an obstruction. In this event, the displacement of the trip wire on contact with the obstruction operates the switch 42 to allow the boom 9 to swing free.

The trailing wheel 11 is mounted between a pair of trailing links 98 which are mounted on torsion rubber suspension units (not shown) in a mounting bush 99 secured to the lower end of a vertical rod 87. As more clearly seen in Figure 7, the trailing wheel 11 is steerable. For this purpose, the rod 87 is preferably a torsion rod carried within the end tube 24. An L-shaped plate 88 is secured to the rod 87, and has one arm 89 in line with the wheel 11.

A plate 95 secured to the tube 24 carries a single-acting hydraulic ram 93, whose operating rod 94 is connected to an operating bar 96 pivoted at one end to the plate 95. The free end of the bar 96 carries a pivoted bush 91 through which a mushroom-headed rod 90 is able to slide, the rod 90 being secured at its other end to a ball joint 97 at the arm 89. A return spring 92 is secured between the plate 95 and the bar 96. In operation, when the ram 93 is actuated to extend the rod 94 fully, the bar 96 is moved to pull the rod 90 and so turn the wheel 11 into line with the boom 9, while when the ram 93 is fully retracted, the spring 92 acts to pull the bar 96 towards the wheel pivot point and the rod 90 is then able to slide through the bush 91 to allow complete freedom for the wheel 11 to turn through 360° as required by castor action in following the movement of the boom 9.

It will be realised that, instead of the single-acting ram 93 and spring 92 construction, a double-acting ram could be used. However, the use of the single-acting ram allows selective operation of one or other, but not both, of the rams 16 and 93 by a double acting solenoid valve. This, in turn, permits simplification of the electrical control of the hydraulic equipment and allows ready synchronisation of the operation of the two rams.

Such synchronisation, as is referred to earlier, is preferably achieved by an electrical arrangement using cams and micro-switches. In such a case, the cam and switch arrangement could conveniently be provided at the upper end of the pillar 50, the cams being adjustable around the stub ends 63 (Figure 4). The cam and switch arrangement would preferably be arranged to permit the drive operation of the ram 16 extending, due to the sensitivity of the control obtainable, only over an arc of some 85°—89° towards its required operational position on either side of the tractor axis. Thus, when a given strip of spraying is completed, a changeover switch disconnects the drive energisation for ram 16 in the current spraying position and the boom 9 then moves freely over approximately the first 91°—95° of its travel towards the opposite working position. Thereafter, the opposite hand drive energisation for the ram 16 may be engaged to power the ram to complete the boom movement.

The control of the ram 93 may also be arranged to permit a somewhat different manoeuvre from that described in Figure 2. This method of reversing the direction of travel of the spraying equipment is illustrated in Figure 8. It is assumed that at the end of a first strip, the tractor 1 occupies a position M. At this point, the tractor is turned sharply in the opposite direction from that of the next strip to be sprayed, to position M' and at the same time, the trailing wheel 11 of the boom 9 is turned into line with the boom. After this first movement the boom occupies a position approximately as shown at R. The tractor is then reversed to a new position at M", slightly beyond the track of wheel 11 at the end of the first strip, the movement of the tractor and the wheel 11 being indicated by dashed lines. Where, for example, the state of the crop permits, the initial forward movement of the tractor may be omitted and the tractor reversed directly from the position M to M". From this latter position the tractor is turned sharply into position to spray the next strip and at the same time the trailing wheel 11 is turned through 90° into the required trailing position. It will be seen that this manoeuvre permits headlands that are little more than the overall length of the tractor and is itself a manoeuvre which is impractical using a form of construction in which a boom is supported from a separate chassis trailed behind the prime mover.

The ability to steer the trailing wheel 11, which is achieved by manually controlling the operation of the ram 93 also aids the use of the equipment over sloping terrain and particularly when turning at the bottom of a steep slope. The interia of the boom during a spraying operation, particularly when spraying is carried out on such a sloping site, means that under some conditions the boom will tend to commence a turning moyement, ahead of the tractor, particularly on a steeply downhill run or if the tractor slows or stops. In this case, the trailing wheel is turned outwards to counter this tendency to over-run.

The second arm 84 (Figure 7) of the L-shaped plate 88 is provided for transport purposes, the bush 91 being disconnected from the arm 96 and a fixed linkage (not shown) being provided from the arm 96 to one of a pair of holes in the arm 84.

Under these conditions, controlled actuation of the ram 93 allows the trailing wheel 11 to be steered through an arc of the order of 90° to enable the boom to follow the path of the tractor or other towing vehicle.

The arrangement of the trailing wheel 11 may also be modified by the inclusion of a metering device (not shown) driven from the wheel by, for example, the attachment of a drive resembling the speedometer coupling of a cycle. alternatively, a simple cyclometer type of counter could be provided to give a record of the distance travelled by the boom as an aid to checking or calculating the spray rate applied.

The suspension of the trailing wheel 11 is preferably so designed that when the boom is trailed during transport, the suspension is relatively hard, but when working, with a proportion of the boom weight being taken by the cable 19, the suspension is relatively softly sprung and damped. For this purpose, the torsion rod 87 within the vertical tube 24 may include a variable rate spring about the operating rod of a hydraulic damper, the damper being carried within the tube, and connected between the trailing links 98 and the torsion rod. These arrangements are effective when the end of the boom is slightly raised by cable 19. When, however, the cable 19 is released, as during transport, the weight of the boom causes this suspension to be over-ridden.

Figure 9 shows a further arrangement for supporting the boom and controlling its movement. The arrangement shown represents a structure intended to be supported on a conventional three-point fixing of an agricultural tractor and is a simplified structure from which those parts not essential for an understanding of its operation have been omitted for the sake of clarity.

A pair of substantially triangular upper and lower frames 101 and 102 respectively, are spaced apart by a pair of vertical members 103. The apices of the triangular frame 101 and 102 extend, in use, rearwards from the tractor (not shown).

A vertical shaft 105 is provided between the apices of the frames 101 and 102, supported on suitable plates, such as the plate 106, and bushes 107. The shaft 105 provides a pivot for a boom support arrangement which consists of a tubular member 109 mounted on bearings 110, the bearings being arranged about the shaft 105 and being supported in either end of the tubular member 109. A bush 111, secured to ths shaft 105 is provided within the tubular member 109 and a spring 112 is located about the shaft 105 and the upper bearing 110 to provide a sprung suspension for the tubular member 109.

A crossbar 113 is secured at its centre to the tubular member 109 and carries pivot blocks 114 which support a boom support yoke 115 on pivot pins 108, these pins being arranged to be withdrawn readily to release the boom 116 from the crossbar 113. The boom 116, in the form of a hollow tubular structure, having a length of, say, ten or fifteen metres, is secured to the mid-point of the yoke 115, the axes of the crossbar and the boom being mutually perpendicular. Thus, the boom 116 is supported by means of the crossbar 113 upon the tubular member 109 for rotation in a substantially horizontal plane about the shaft 105 from one working position, as shown, to its second working position approximately 180° from that shown and extending from the opposite side of the tractor, as in the previous examples.

The boom 116 is both supported and moved by means of a driving control cable 117. At one end, the cable 117 is terminated at a pulley block 118. A boom support cable 119 is secured to the boom 116 at spaced linkage points 120, only one of which is shown in the drawing, and is passed over a pulley 121 within the pulley block 118, which acts as a compensating arrangement for variations in the angle of the boom 116 relative to the vertical shaft 105 during use. The driving cable 117 passes over a pulley 122 freely mounted at one end of a drive arm 123, then passes over rollers 124, down through the upper frame 101, between a pair of pulleys 125 and to a cruciform arm 129, to be described.

The drive arm 123 is pivoted at 126 between a horizontal support comprising a pair of parallel members 127 supported by spacers 128 at each end, the spacers 128 being pivoted on bearing blocks 179 provided on the frame 101.

The arrangement is such that the horizontal support is free to swing bodily about a substantially horizontal axis parallel to the fore-and-aft axis of the apparatus with the result that the drive arm 123 is able to move in an arc transverse the fore-and-aft axis as the horizontal support pivots. At the same time, the driving arm 123, because it is pivoted between the members 127 is also able to move in an arc in a plane parallel to the members 127.

A hydraulic ram 130 is provided between the drive arm 123 and the members 127 to raise the arm 123 relative to these members, so that its operation will cause the drive arm 123 to pull on the driving cable 117, the force from the driving ram 130 being transmitted via the driving cable 117 and the boom support cable 119 to act on the boom 116. A compression spring 131 is shown as provided over the operating rod 132 of the ram 130, the force exerted by the spring 131 being only sufficient, when the ram 130 is unoperated, to take up any slack from the cables 117 and 119 without exerting any effective tractive force on the boom 116. In practice, the ram 130 and its rod 132 would preferaby be contained within the spring 131.

A chain 133 is secured at each end to fixing points 166 at opposite ends of the base of the upper frame 101, the chain 133 passing freely through a hole 144 in the drive arm 123. Collars 159 are provided on the chain 133 on either side of the arm 123, to limit the movement of the arm 123 in the transverse arc, the collars 159 being adjustable along the chain 133 to permit variation in the length of the drive arm 123 as may be required during operation of the apparatus.

A shaft 134 is provided below the lower frame 102, aligned with the fore-and-aft axis, and the shaft 134 is supported in bearing blocks 135, one (not shown) being provided beneath a plate 136 at the apex of the frame 102, while the second block 135 is provided at member 137 forming the base of the frame 102. A tube 138 is provided on the shaft 134 and a pair of levers 139 are secured to the tube 138 to support a spindle 140 which carries a stop buffer wheel 141 similar to the wheel 68 of Figure 4, the crossbar 113 (Figure 9) contacting the wheel 141 as the boom 116 moves into a working position to displace the levers 139 and rock the tube 138 on the shaft 134.

An anchor frame 142 is provided, spanning the lower frame members 102 to provide a fixing point for the lower end of a tension spring 143. The other end of the spring 143 is coupled to a lever 144 depending from and secured to the horizontal members 127. The effect of the spring 143 is to bias the members 127 to bring the drive arm 123 into a vertical plane aligned with the fore-and-aft axis of the apparatus when the boom 116 is in a position midway between its working positions.

A third lever 145 is secured to the tube 138 and extends upwards adjacent the end of the tube 138. A further lever 146 is secured to the shaft 134, the levers 145 and 146 being secured together by a shear pin 147, so that they move together, thereby effectively coupling the tube 138 and shaft 134 together. The upper end of the lever 146 is attached to the lower end of a heavy duty spring 150 whose upper end is fixed to a tension bolt 148 in the plate 106 on the upper frame 102, a nut 149 being used to adjust the tension of the spring 150. The spring 150 forms the main tensioning spring for the buffer stop wheel 141 to cushion the shock as the crossbar 113 meets the wheel 141 at the limit of its travel when the boom 116 arrives at one of its working positions.

A fourth lever 160 is also secured to the tube 138 and the cruciform lever 129 previously referred to is pivoted at 161 on the lever 160. The transverse arms 162 of the lever 129 each carry a pin 163, the upper end of the lever being movable between the pins 163. As will readily be seen, the levers 160 and 129 provide a "lost motion" arrangement for the driving control cable 117, so that, as the tube 138 is rocked by contact of the crossbar 113 with the wheel 141, the upper end of the lever 160 moves relative to the lever 129 until it contacts one of the pins 163, when it will exert a pull on the cable 117. The arrangement is such as to provide a compensator allowing a predetermined movement of the lever 160 before the cable 117 is tensioned.

Where it is required to provide markers in association with the apparatus, so that the limit of the track of the treated strip is marked on the ground, a pair of tines may be provided and operated by movement of the tube 138. The tines 151, of which there are two, only one being illustrated in the drawing, are carried in bearing brackets 152 secured one at each end of the base member 137 of the lower triangular frame 102 and are loaded by springs 154 in an upward direction. Each tine 151 has a pair of pins 153 and an arm of a bell crank lever 164 extends between the pins 153, the bell crank lever 164 being pivoted on the tube 138. As will be seen from the drawing, the respective bell crank levers for the two tines are arranged side-by-side, second arms of both bell crank levers 164 extending downwards in parallel configuration to embrace an operating pin 155 carried by an operating lever 156 extending downwardly from the tube 138 to which it is fixed. Thus, as the tube 138 is turned in response to the crossbar 113 movement, the action of the pin 156 is to cause an appropriate one of the tines 151 to be lowered into a position in which it will engage the ground, thereby making a recognisable mark as the tractor moves forward.

In operation, the boom 116, which is equipped with a trailing wheel at its outboard end, as previously described, is aligned across the direction in which it is required to move in traversing a row over which the chemical is to be applied and the tractor is turned into line with the intended direction. As the tractor turns, the hydraulic ram 130 is operated to move the drive arm 123 away from the members 127.

The raising of the drive arm 123 applies a driving force to the cable 117 and a reactive force component acts on the drive arm 123, tilting it towards that side of the apparatus towards which the boom 116 is turning, the pair of horizontal members 127 rotating by reason of this action, until that collar 159 on the chain 133 which is on the same side as the boom 116 is brought up against the drive arm 123 under the influence of the forces developed by the drive cable 117, thereby both driving the boom 116 to its final working position and also pulling the drive arm 123 into an optimum position for the application of maximum driving force to the boom 116, the driving force then having a horizontal component to pull the boom into position and a vertical component to support at least some of the weight of the boom 116.

It will be clear upon consideration that this method of driving the boom and at the same time supporting its weight is equally applicable for whichever of the two working positions the boom 116 is driven into. In changing from one working position to the other, following the manoeuvres previously described in detail, the tractor is turned with respect to the boom 116, while the driving ram 130 is de-operated. During this operation, as the boom 116 passes through the fore-and-aft axis of the tractor, the drive arm 123 is pulled into a midway position by the tension on the driving cable 117, applied by the spring 131, in readiness for the re-operation of the driving ram 130 to drive the boom 116 into its working position on the opposite side of the tractor. In practice, the operation of the driving ram 130 is electrically interlocked so that its operation can occur only when the boom is past a critical angle on either side of the fore-and-aft axis, such operation being controlled by micro-switches (not shown), as described earlier. With this arrangement, it is found that the critical angle is much less and the boom drive may be applied effectively from a boom position in line with the fore-and-aft axis.

As also earlier described, it is preferred, in practice, to provide the trip and guard wires extending alongside the boom 116, and to trigger electrical safety switches to cut driving power from the ram 130 and so prevent damage to the boom 116. The previously described arrangements for suspending and controlling the action of the trailing wheel (not shown) at the outboard end of the boom would also be provided.

As shown, the boom 116 consists of a simple tubular member. However, it will be realised that while this boom may itself carry distributor or spray heads, the present application lends itself to an arrangement in which the whole assembly may be mounted higher on the rear of the tractor than has previously been described and in this case the boom 116 may be used as a support member for a separate spray or distribution line 157, shown in broken lines, which is suspended from the boom 116 and which would itself carry the actual distributing heads 158. In this case, too, brackets similar to the bracket 165 would be provided to allow spray heads to be used to cover the area beneath the apparatus.

In order to permit the use of a variable length boom, the boom 116 may consist of, say, two lengths of tube, one of which is proportioned to slide within the other to form a composite telescoping structure. The spray head distribution lines may be arranged in modular fashion. For example, each spray head may be secured to the boom with a band, the band being fitted with an over-centre toggle fastener and preferably being lined with a resilient material to avoid local stress points. Such a head unit may be fitted with stub ends of pipe and the heads may then be linked with short lengths of tubing clipped to the outside of the boom and being fitted with quick-release unions. The heads would also be fitted with sprung mountings to allow them to yield in the event of their striking obstructions. An alternative to a telescoping boom is, of course, a boom made up from short sections.

It will be recalled that the pivot pins 108 are readily releasable to allow the boom 116 to be dropped away from the apparatus. This feature is of value in changing boom sections to alter the length of the boom during spraying operations, or to leave the boom at the spraying site during a pause in operations. This feature is used in conjunction with the quick-release supply lines. However, to avoid damage to delicate spray heads, it is desirable to provide folding legs on the boom sections, so that they are supported clear of the ground. The boom support cable 119 is also preferably fitted with readily releasable fasteners to permit the total disengagement of the boom, and, of course, an appropriate length of support cable 119 is used to suit the boom length fitted.

Other variants in the apparatus will be appreciated by one skilled in the art. For example, the action of the boom cushion stop may be improved by the addition of a shock absorber, fitted within the spring 150. The present structure permits tanks for the requisite chemicals to be accommodated between the triangular frame members 101 and 102 immediately behind the vertical members 103. A further advantage of the arrangement is that while the extra weight of the controlling apparatus is behind the vertical members 103, the effective load of the boom is supported at the end of the drive arm 123, which, when the ram 130 is fully operated, is inclined forwards of the frames 101 and 102 of the apparatus, thereby bringing the centre of gravity of the arrangement considerably farther forward than would otherwise be the case and countering the tendency of a heavy load behind the tractor to reduce the effective weight on its front wheels. It will be appreciated that where the tractor is fitted with a cab, the forward motion of the arm 123 is limited to avoid collision with the cab.

The arrangement described, as noted earlier, is particularly suited for attachment to the three point suspension customarily fitted to agricultural tractors, and it will be appreciated that both forward- and rear-mounted suspensions may be used to carry the present apparatus. Where, however, a purpose-built vehicle is used to carry a boom control arrangement as an integral unit, the unit may, with advantage, be arranged so that its weight is even farther forward. For example, the boom pivot may be arranged so that it is over the rear wheel axle of the vehicle.

While the spraying of liquids has been referred to throughout the preceding descriptions, it will be clear that, for example, powder chemicals may also be applied using the boom arrangement of the present invention. In this case, the boom would carry distributor heads and these heads would be supplied by pneumatic delivery hoses from a supply container carried on the tractor, the necessary air supply being derived from a blower carried on board.

It will also be appreciated that a boom arrangement suspended and driven as described may also be modified for other purposes, such as seed distribution, for example. Thus, metering hoppers and distributors could be spaced along the boom and such distributors could be supplied, for example, by an archimedian screw conveyor arrangement within a simple tubular boom, or by a pneumatic conveyor arrangement.

The materials to be distributed may be carried in containers supported on the framework of the boom control arrangement, or may be suspended from an upper framework, provided that they are arranged to be clear of the space required for boom movement. Other arrangements possible would, of course, include known features, such as saddle tanks.

It is also possible to provide shields on the boom to allow band spraying (for example, to allow inter-row crop treatment). Thus, shields or shrouds may be carried on outriggers on the boom. The use of such outriggers linked, for example, by wires or cables allows the fitting of a skirt or canopy to prevent spray drift such as could occur under windy conditions.

The later-described embodiments include the feature that the drive control cable at least partly supports the weight of the boom. The earlier, simpler, arrangement, however, is useful for the purpose of spraying embankments, such as those along motorways, for example, where the control cable may be used to maintain the position of the boom without the need for a lifting component. In connection with spraying narrow strips of this kind a valuable feature is that the boom may be held at a "backward" angle to the direction of travel of the tractor, the trailing wheel being turned to a corresponding angle. In this case the ability to select only a proportion of the spray heads is also valuable to avoid overspraying. The same technique may also be used in spraying the borders of fields, for example, the tractor being driven nearest the hedges to avoid any possibility of damage to the boom in striking projecting branches of the hedge. In this case, a bracket, similar to the bracket 165 of Figure 9,may be advantageous to carry a spray head on the outboard side of the tractor to distribute the spray into the hedge bottom. In this way a preliminary strip may be treated around the edge of the field, the width of the strip being controlled by the angle at which the boom is held relative to the direction in which the tractor is driven.

It will be realised that marking is an optional feature, as noted earlier. It is of particular value, for example, when spraying at night, and in this case it is also valuable to provide a light at the end of the boom.

The arrangements described use hydraulic actuators and it will be realised that these arrangements are consistent with the provision of hydraulic facilities on modern agricultural equipment. A further refinement applicable to the embodiments described is the provision of a hydraulic motor to drive the wheel at the end of the boom. Under some circumstances this drive may supplement or even supersede the drive provided by the boom drive control cables referred to. For example, such a drive may be arranged to attempt to drive the boom end faster than the tractor's forward motion and in this case, a stop on the tractor (such as a tension or buffer stop wheel) would be used to shut off the drive to the boom wheel, with the result that the boom end is always positively driven up to this limit stop and thus effectively matches the speed of the tractor. Such an ability to drive the boom wheel positively would alternatively be potentially advantageous in aiding the prevention of the break-away action of the boom when traversing sloping terrain.

However, care is necessary in using such a drive on the boom wheel to ensure that if a free castor action of the wheel through 360° is to be provided, then this action cannot result in the wheel being so turned that the hydraulic motor supply lines are caught up.

A refinement of the castor action control for the boom wheel consists, for example, of biassing the wheel, which is otherwise free to castor, into a position in line with the boom by means of a spring between a fixing lug on the boom and a suitable arm fixed to the head of the torsion rod carrying the wheel. A linkage is then provided from the boom support cable to disable the spring when tension is applied to the driving control cable.

The preceding description has required the use of shear pins and shear bolts to protect parts of the mechanism from damage under overload conditions. It will be realised that in practice a positive stop would be provided for those members carrying a shear device linkage, in order to permit the efficient operation of the shear devices.

**Claims for Contracting States BE, DE, FR, IT, NL, SE**

1. Material distributing apparatus for agricultural use having a boom carrying material distributing devices spaced therealong, the apparatus being carried by a prime mover across terrain to be treated while material is supplied to the distributing devices, characterised in that the boom (9; 11) is pivoted at one end on the apparatus as carried by the prime mover (1); the opposite end of the boom is supported by a wheel (11) in contact with the terrain and driving means (16, 19; 130, 117) is provided operable from the prime mover to drive the boom into a working position in which it is held at a predetermined angle to the direction of motion of the prime mover.

2. Apparatus as claimed in Claim 1, further characterised in that the driving means includes a driving control cable (19; 117) secured at the prime mover and attached to the boom and means (16; 130) for producing tension in the cable to pull the boom into a working position.

3. Apparatus as claimed in Claim 2, further characterised in that a pre-tensioned buffer stop (68; 141) is actuable to limit the travel of the boom relative to the prime mover when the boom moves into its working position and to maintain a predetermined tension in the driving control cable.

4. Apparatus as claimed in Claim 2 or Claim 3, further characterised in that the tension producing means is a hydraulic ram (16; 130) arranged to act at an intermediate position on the cable.

5. Apparatus as claimed in Claim 4, further characterised in that the ram is arranged to act on an intermediate member (51; 123) at a point above the horizontal plane of the boom to provide a component of lifting force acting on the boom.

6. Apparatus as claimed in Claim 5, further characterised in that the intermediate member (123) is arranged in response to actuation of the ram to pivot both in an arc parallel to the fore-and-aft axis of the prime mover to move the point of application of driving effort in the direction of motion of the prime mover and in an arc transverse the fore-and-aft axis to shift the point of application to that side of the prime mover on which the boom is to be driven.

7. Apparatus as claimed in any preceding claim, further characterised in that the wheel (11) supporting said opposite end of the boom is steerable.

8. Apparatus as claimed in any preceding claim, further characterised in that the wheel supporting the boom is drivable.

9. Apparatus as claimed in any preceding claim, further characterised in that the prime mover has means (34; 151) for marking its track across the terrain.

10. Apparatus as claimed in any preceding claim, further characterised in that the prime mover includes at least one material distributing device positioned to extend the area of the terrain over which the material is distributed beneath and/or to that side of the prime mover opposite the side from which the boom projects.

**Claims for Contracting State GB**

1. Material distributing apparatus for agricultural use having a boom carrying material distributing devices spaced therealong, the apparatus being carried by a prime mover across terrain to be treated while material is supplied to the distributing devices, characterised in that the boom (9; 11) is pivoted at one end on the apparatus as carried by the prime mover (1); the opposite end of the boom is supported by a wheel (11) in contact with the terrain, driving means (16, 19; 130, 117) is provided operable from the prime mover to drive the boom into a working position in which it is held at a predetermined angle to the direction of motion of the prime mover, and means (93) are provided for steering the wheel (11) supporting said opposite end of the boom.

2. Apparatus as claimed in claim 1, further characterised in that the means (93) for steering the wheel (11) are selectively operable to turn the wheel (11) into line with the boom (9; 11) and to allow the wheel (11) to perform castor action.

3. Apparatus as claimed in claim 2, further characterised in that the driving means includes a driving control cable (19; 117) secured at the prime mover and attached to the boom and means (16; 130) for producing tension in the cable to pull the boom into a working position.

4. Apparatus as claimed in claim 3, further characterised in that a pre-tensioned buffer stop (68; 141) is actuable to limit the travel of the boom relative to the prime mover when the boom moves into its working position and to maintain a predetermined tension in the driving control cable.

5. Apparatus as claimed in claim 3 or claim 4, further characterised in that the tension producing means is a hydraulic ram (16; 130) arranged to act at an intermediate position on the cable.

6. Apparatus as claimed in claim 5, further characterised in that the ram is arranged to act on an intermediate member (51; 123) at a point above the horizontal plane of the boom to provide a component of lifting force acting on the boom.

7. Apparatus as claimed in claim 5, further characterised in that the intermediate member (123) is arranged in response to actuation of the ram to pivot both in an arc parallel to the fore-and-aft axis of the prime mover to move the point of application of driving effort in the direction of motion of the prime mover and in an arc transverse the fore-and-aft axis to shift the point of application to that side of the prime mover on which the boom is to be driven.

8. Apparatus as claimed in any preceding claim, further characterised in that the wheel supporting the boom is drivable.

9. Apparatus as claimed in any preceding claim, further characterised in that the prime mover has means (34; 151) for marking its track across the terrain.

10. Apparatus as claimed in any preceding claim, further characterised in that the prime mover includes at least one material distributing device positioned to extend the area of the terrain over which the material is distributed beneath and/or to that side of the prime mover opposite the side from which the boom projects.

**Patentansprüche für die Vertragsstaaten BE DE FR IT NL SE**

1. Materialverteilungsvorrichtung für landwirtschaftliche Zwecke mit einem Ausleger, der über seine Länge verteilt Materialverteilergeräte trägt, wobei die Vorrichtung von einer Zugmaschine getragen über das zu behandelnde Bodenareal geführt wird, während man den Verteilergeräten das Material zuführt, dadurch gekennzeichnet, daß der Ausleger (9; 11) an dem von der Zugmaschine (1) getragenen Ende der Vorrichtung gelenkig angeschlossen ist; daß das gegenüberliegende Ende des Auslegers (9; 11) mit einem Rad (11) abgestützt ist, welches den Boden berührt, und daß eine von der Zugmaschine (1) bedienbare Antriebsvorrichtung (16, 19; 130, 117) vorgesehen ist, mit der sich der Ausleger in eine Arbeitsstellung bewegen läßt, in der er sich bezüglich der Fahrtrichtung der Zugmaschine (1) unter einem vorbestimmten Winkel erstreckt.

2. Vorrichtung nach Anspruch 1 dadurch gekennzeichnet, daß die Betätigungsvorrichtung ein Steuerseil (19; 117) enthält, welches an der Zugmaschine und am Ausleger angeschlossen ist und mit einer Spannvorrichtung (16; 130) zusammenarbeitet, um durch Spannen des Steuerseiles den Ausleger in eine Arbeitsstellung zu ziehen.

3. Vorrichtung nach Anspruch 2 dadurch gekennzeichnet, daß ein unter Vorspannung stehender Anschlag (68; 141) vorgesehen ist, mit dem sich bei einer Verschwenkung in die Arbeitsstellung die Relativbewegung zwischen Ausleger und Zugmaschine begrenzen läßt und mit dem im Steuerseil eine zuvor festgelegte Spannung aufrechterhalten wird.

4. Vorrichtung nach Anspruch 2 oder 3 dadurch gekennzeichnet, daß die Spannvorrichtung eine mittig am Steuerseil angreifende hydraulische Kolben-Zylinderanordnung (16; 130) ist.

5. Vorrichtung nach Anspruch 4 dadurch gekennzeichnet, daß die Kolben-Zylinderanordnung über ein Zwischenglied (51; 123) an einem Punkt oberhalb der Horizontalebene des Auslegers angreift und hierdurch eine Hubkraftkomponente für den Ausleger erzeugt.

6. Vorrichtung nach Anspruch 5 dadurch gekennzeichnet, daß das Zwischenglied (123) so angeschlossen ist, daß es sich bei der Betätigung der Kolben-Zylinderanordnung sowohl auf einem Bogen, der sich parallel zur horizontalen Längsachse der Zugmaschine als auch auf einem Bogen quer zu dieser Längsachse bewegt, um einerseits den Angriffspunkt der Betätigungskraft in Fahrtrichtung der Zugmaschine und andererseits zu der Seite der Zugmaschine, zu der der Ausleger bewegt wird, zu verschieben.

7. Vorrichtung nach Anspruch 1 bis 6 dadurch gekennzeichnet, daß das das Außenende des Auslegers abstützende Rad (11) lenkbar ist.

8. Vorrichtung nach Anspruch 1 bis 7 dadurch gekennzeichnet, daß das den Ausleger abstützende Rad antreibbar ist.

9. Vorrichtung nach Anspruch 1 bis 8 dadurch gekennzeichnet, daß die Zugmaschine mit Mitteln (34; 151) versehen ist, um auf dem Boden den Fahrweg zu markieren.

10. Vorrichtung nach Anspruch 1 bis 9 dadurch gekennzeichnet, daß die Zugmaschine mindestens ein Materialverteilergerät aufweist, welches so angeordnet ist, daß es ein mit Material zu versorgendes Bodenareal überdeckt, das sich unter der Zugmaschine und/oder an der vom ausgeschwenkten Ausleger abgelegenen Seite der Zugmaschine befindet.

**Patentansprüche für den Vertragsstaat GB**

1. Materialverteilungsvorrichtung für landwirtschaftliche Zwecke mit einem Ausleger, der über seine Länge verteilt Materialverteilergeräte trägt, wobei die Vorrichtung von einer Zugmaschine getragen über das zu behandelnde Bodenareal geführt wird, während man den Verteilergeräten das Material zuführt, dadurch gekennzeichnet, daß der Ausleger (9; 11) an dem von der Zugmaschine (1) getragenen Ende der Vorrichtung gelenkig angeschlossen ist; daß das gegenüberliegende Ende des Auslegers (9; 11) mit einem Rad (11) abgestützt ist, welchen den Boden berührt, daß eine von der Zugmaschine (1) bedienbare Antriebsvorrichtung (16, 19; 130, 117) vorgesehen ist, mit der sich der Ausleger in eine Arbeitsstellung bewegen läßt, in der er sich bezüglich der Fahrtrichtung der Zugmaschine (1) unter einem vorbestimmten Winkel erstreckt und daß Mittel (93) vorgesehen sind, um das Rad (11) am Außenende des abgestützten Auslegers zu lenken.

2. Vorrichtung nach Anspruch 1 dadurch gekennzeichnet, daß die Lenkvorrichtung (93) für das Rad (11) umschaltbar ausgebildet ist, um wahlweise das Rad (11) auf den Ausleger (9; 11) auszurichten, oder dem Rad (11) eine freie Nachlauffunktion zu ermöglichen.

3. Vorrichtung nach Anspruch 2 dadurch gekennzeichnet, daß die Betätigungsvorrichtung ein Steuerseil (19; 117) enthält, welches an der Zugmaschine und am Ausleger angeschlossen ist und mit eine Spannvorrichtung (16; 130) zusammenarbeitet, um durch Spannen des Steuerseiles den Ausleger in eine Arbeitsstellung zu ziehen.

4. Vorrichtung nach Anspruch 3 dadurch gekennzeichnet, daß ein unter Vorspannung stehender Anschlag (68; 141) vorgesehen ist, mit dem sich bei einer Verschwenkung in die Arbeitsstellung die Relativbewegung zwischen Ausleger und Zugmaschine begrenzen läßt und mit dem Steuerseil eine zuvor festgelegte Spannung aufrechterhalten wird.

5. Vorrichtung nach Anspruch 3 oder 4 dadurch gekennzeichnet, daß die Spannvorrichtung eine mittig am Steuerseil angreifende hydraulische Kolben-Zylinderanordnung (16; 130) ist.

6. Vorrichtung nach Anspruch 5 dadurch gekennzeichnet, daß die Kolben-Zylinderanordnung über ein Zwischenglied (51; 123) an einem Punkt oberhalb der Horizontalebene des Auslegers angreift und hierdurch eine Hubkraftkomponente für den Ausleger erzeugt.

7. Vorrichtung nach Anspruch 5 dadurch gekennzeichnet, daß das Zwischenglied (123) so angeschlossen ist, daß es sich bei der Betätigung der Kolben-Zylinderanordnung sowohl auf einem Bogen, der sich parallel zur horizontalen Längsachse der Zugmaschine als auch auf einem Bogen quer zu dieser Längsachse bewegt, um einerseits den Angriffspunkt der Betätigungskraft in Fahrtrichtung der Zugmaschine und andererseits zu der Seite der Zugmaschine, zu der der Ausleger bewegt wird, zu verschieben.

8. Vorrichtung nach Anspruch 1 bis 7 dadurch gekennzeichnet, daß das den Ausleger abstützende Rad antreibbar ist.

9. Vorrichtung nach Anspruch 1 bis 8 dadurch gekennzeichnet, daß die Zugmaschine mit Mitteln (34; 151) versehen ist, um auf dem Boden den Fahrweg zu markieren.

10. Vorrichtung nach Anspruch 1 bis 9 dadurch gekennzeichnet, daß die Zugmaschine mindestens ein Materialverteilergerät aufweist, welches so angeordnet ist, daß es ein mit Material zu versorgendes Bodenareal überdeckt, das sich unter der Zugmaschine und/oder an der vom ausgeschwenkten Ausleger abgelegenen Seite der Zugmaschine befindet.

**Revendications pour les Etats Contractants BE DE FR IT NL SE**

1. Appareil distributeur de produit pour l'agriculture, comportant un longeron portant des dispositifs distributeurs de produit espacés sur sa longueur, cet appareil étant porté sur le terrain à traiter par un engin moteur principal, ledit produit étant alors amené auxdits dispositifs distributeurs, caractérisé en ce que: ledit longeron (9; 11) a une extrémité montée pivotante sur l'appareil, lui-même porté par l'engin moteur principal (1); l'extrémité opposée du longeron est supportée par une roue (11) en contact avec ledit terrain et des moyens d'entraînement (16, 19; 130, 117) actionnables à partir dudit engin moteur sont prévus pour entraîner le longeron dans une position de travail pour laquelle il est maintenu sous un angle prédéterminé par rapport à la direction de déplacement de l'engin moteur.

2. Appareil selon la revendication 1, caractérisé en ce que lesdits moyens (93) prévus pour diriger la roue (11) sont actionnables sélectivement pour faire tourner la roue (11) et l'amener dans l'alignement du longeron (9), et pour permettre à la roue de se comporter comme une roulette.

3. Appareil selon la revendication 2, caractérisé en ce qu'un butée d'amortissement mise sous pré-tension (68; 141) est actionnable pour limiter le déplacement du longeron par rapport à l'engin moteur principal lorsque le longeron se déplace dans sa position de travail, et pour maintenir une tension prédéterminée dans ledit câble de commande d'entraînement.

4. Appareil selon la revendication 2 ou 3, caractérisé en ce que les moyens propres à créer une tension dans le câble sont constitués par un vérin hydraulique (16; 130) agencé pour agir dans une position intermédiaire sur le câble.

5. Appareil selon la revendication 4, caractérisé en ce que le vérin est disposé de sorte à agir sur un organe intermédiaire (51; 123) en un point situé au-dessus du plan horizontal du longeron, de sorte à fournir une composante de force ascendante agissant sur ledit longeron.

6. Appareil selon la revendication 5, caractérisé en ce que l'organe intermédiaire (123) est agencé de sorte qu'en réponse à l'action du vérin il pivote à la fois selon un arc parallèle à l'axe longitudinal avant-arrière de l'engin moteur principal, pour déplacer le point d'application de l'effort d'entraînement dans la direction du déplacement dudit engin, et selon un arc transversal audit axe longitudinal avant-arrière, pour déplacer le point d'application sur le côté dudit engin sur lequel le longeron doit être entraîné.

7. Appareil selon l'une quelconque des revendications précédentes, caractérisé en ce que la roue (11) supportant ladite extrémité opposée du longeron est orientable.

8. Appareil selon l'une quelconque des revendications précédentes, caractérisé en ce que la roue supportant le longeron peut être entraînée.

9. Appareil selon l'une quelconque des revendications précédentes, caractérisé en ce que l'engin moteur comporte des moyens (34; 151) pour marquer sa trace sur le terrain.

10. Appareil selon l'une quelconque des revendications précédentes, caractérisé en ce que l'engin moteur principal comporte au moins un dispositif distributeur de produit positionné de sorte à agrandir la surface du terrain au-dessus de laquelle le produit est répandu dessous et/ou sur le côté de l'engin qui est opposé à celui à partir duquel le longeron s'étend.

**Revendications pour l'Etat Contractant GB**

1. Appareil distributeur de produit pour l'agriculture, comportant un longeron portant des dispositifs distributeurs de produit espacés sur sa longueur, cet appareil étant porté sur le terrain à traiter par un engin moteur principal, ledit produit étant alors amené auxdits dispositifs distributeurs, caractérisé en ce que: ledit longeron (9; 11) a une extrémité montée pivotante sur l'appareil, lui-même porté par l'engin moteur principal (1); l'extrémité opposée du longeron est supportée par une roue (11) en contact avec ledit terrain; des moyens d'entraînement (16, 19; 130, 117) actionnables à partir dudit engin moteur sont prévus pour entraîner le longeron dans une position de travail pour laquelle il est maintenu sous un angle prédéterminé par rapport à la direction de déplacement de l'engin moteur; et des moyens (93) sont prévus pour diriger la roue (11) qui supporte ladite extrémité opposée du longeron.

2. Appareil selon la revendication 1, caractérisé en ce que les moyens (93) prévus pour diriger la roue (11) sont actionnables sélectivement pour faire tourner la roue (11) et l'amener dans l'alignement du longeron (9), et pour permettre à la roue de se comporter comme une roulette.

3. Appareil selon la revendication 2, caractérisé en ce que lesdits moyens d'entraînement comprennent un câble de commande d'entraînement (19; 117) fixé sur ledit engin moteur principal et attaché au longeron, et des moyens (16; 130) propres à créer une tension dans le câble pour tirer le longeron dans une position de travail.

4. Appareil selon la revendication 3, caractérisé en ce qu'une butée d'amortissement mise sous pré-tension (68; 141) est actionnable pour limiter le déplacement du longeron par rapport à l'engin moteur principal lorsque le longeron se déplace dans sa position de travail, et pour maintenir une tension prédéterminée dans ledit câble de commande d'entraînement.

5. Appareil selon la revendication 3 ou 4, caractérisé en ce que les moyens propres à créer une tension dans le câble sont constitués par un vérin hydraulique (16; 130) agencé pour agir dans une position intermédiaire sur le câble.

6. Appareil selon la revendication 5, caractérisé en ce que le vérin est disposé de sorte à agir sur un organe intermédiaire (51; 123) en un point situé au-dessus du plan horizontal du longeron, de sorte à fournir une composante de force ascendante agissant sur ledit longeron.

7. Appareil selon la revendication 6, caractérisé en ce que l'organe intermédiaire (123) est agencé de sorte qu'en réponse à l'action du vérin, il pivote à la fois selon un arc parallèle à l'axe longitudinal avant-arrière de l'engin moteur principal, pour déplacer le point d'application de l'effort d'entraînement dans la direction du déplacement dudit engin, et selon un arc transversal audit axe longitudinal avant-arrière, pour déplacer le point d'application sur le côté dudit engin sur lequel le longeron doit être entraîné.

8. Appareil selon l'une quelconque des revendications précédentes, caractérisé en ce que la roue supportant le longeron peut être entraînée.

9. Appareil selon l'une quelconque des revendications précédentes, caractérisé en ce que l'engin moteur comporte des moyens (34; 151) pour marquer sa trace sur le terrain.

10. Appareil selon l'une quelconque des revendications précédentes, caractérisé en ce que l'engin moteur principal comporte au moins un dispositif distributeur de produit positionné de sorte à agrandir la surface du terrain au-dessus de laquelle le produit est répandu dessous et/ou sur le côté de l'engin qui est opposé à celui à partir duquel le longeron s'étend.

FIG. 1.

FIG. 2.

FIG. 3.

FIG. 4.

FIG. 5.

2

FIG. 6.

FIG. 7.

FIG. 8.

Fig. 9.